Europäisches Patentamt

European Patent Office

Office européen des brevets

(19)

(11) Publication number: **0 185 272**
**B1**

(12) **EUROPEAN PATENT SPECIFICATION**

(45) Date of publication of patent specification: **05.10.88**

(21) Application number: **85115539.0**

(22) Date of filing: **06.12.85**

(51) Int. Cl.⁴: **B 23 K 35/30,** B 23 K 11/26,
B 32 B 15/18, C 23 C 28/02

(54) A method for welding a titanium sheet to a ferrous metal.

(30) Priority: **17.12.84 US 682740**

(43) Date of publication of application:
**25.06.86 Bulletin 86/26**

(45) Publication of the grant of the patent:
**05.10.88 Bulletin 88/40**

(84) Designated Contracting States:
**AT BE CH DE FR GB IT LI LU NL SE**

(56) References cited:
**EP-A-0 060 083**
**US-A-4 023 936**
**US-A-4 337 300**
**US-A-4 411 962**

**WELDING JOURNAL, vol. 40, no. 12, December
1961 D.R. Mitchell and H.D. Kessler "The
Welding of Titanium to Steel" pages 546-552**

(73) Proprietor: **THE DOW CHEMICAL COMPANY**
**2030 Dow Center Abbott Road P.O. Box 1967
Midland, MI 48640 (US)**

(72) Inventor: **Dang, Hiep D.**
**511 Southern Oaks**
**Lake Jackson Texas 77566 (US)**
Inventor: **Beaver, Richard Neal**
**10 Forest Lane**
**Angleton Texas 77515 (US)**

(74) Representative: **Weickmann, Heinrich, Dipl.-Ing.
et al**
**Patentanwälte Dipl.-Ing. H.Weickmann Dipl.-
Phys.Dr. K.Fincke Dipl.-Ing. F.A.Weickmann
Dipl.-Chem. B. Huber Dr.-Ing. H. Liska Dipl.-
Phys.Dr. J. Prechtel Postfach 860820
D-8000 München 86 (DE)**

Courier Press, Leamington Spa, England.

## Description

The invention resides in a method for joining titanium to a ferrous metal. More specifically, the invention resides in a method for joining a titanium sheet of an electrochemical cell to a ferrous metal backboard through a weldably compatible intermediate metal and a titanium intermediate.

Titanium and ferrous metals cannot easily be joined directly to each other by welding, because the resulting titanium/ferrous metal mixture, or alloy, is extremely brittle and usually will not survive the shrinkage stresses imposed upon it during cooling from the welding temperature.

To weld titanium to a ferrous metal, an intermediate metal, which is compatible with both the ferrous metal and the titanium, is positioned between, and welded to, each of the two metals. The intermediate metal forms an alloy with the titanium and with the ferrous metal, thus joining the titanium to the ferrous metal.

Among the metals known to be compatible with titanium and ferrous metal is vanadium. A discussion concerning the welding of ferrous metal to titanium using vanadium can be found in "The Welding of Titanium to Steel", *Welding Journal* (December 1961), D. R. Mitchell and H. D. Kessler.

Titanium is commonly used to line various containers. However, since titanium is much more expensive than various other metals, such as steel or other ferrous metals, the titanium liners are made as thin as is absolutely necessary to conserve material and reduce material cost. Frequently, such thin layers of titanium develop leaks much faster and easier than would a titanium layer of greater thickness. This problem is especially severe at points where titanium has been welded to a ferrous metal through a vanadium intermediate due to alloying of the thin layer of titanium with the vanadium during welding, leaving little of the titanium metal available for protection against a corrosive environment.

One reasonable method to follow in welding, for example, a titanium sheet to a ferrous metal is to use a thicker sheet of titanium. This, however, is wasteful because the extra thickness is needed only at the point of welding, and is not needed throughout the entire body. Additionally, if the titanium sheet is to be formed into shapes such as, for example, elongated ribs or vanes, it is very difficult to form thicker sheets of titanium, without cracking the titanium. In addition, thicker sheets of titanium require higher welding current and longer welding times and, therefore, generate more heat. The extra heat tends to crack or deform the titanium sheet. It has also been found that thicker titanium sheets do not bond well.

It would, therefore, be highly desirable to have a method to weld a very thin sheet of titanium to a ferrous metal using an intermediate metal, yet avoiding the problem with leaks caused by the weld.

The present invention particularly resides in a method of welding a titanium sheet having a thickness of less than about 2 millimeters to a ferrous metal, wherein a weldably compatible intermediate metal positioned adjacent to the ferrous metal and a titanium intermediate positioned adjacent to the titanium sheet between the titanium sheet and the ferrous metal are employed.

The present invention also resides in an article comprising a titanium sheet having a thickness of less than about 2 mm welded to a ferrous metal, characterized by a titanium intermediate metal having a thickness of less than 2 mm positioned adjacent to the titanium sheet, and a vanadium intermediate metal having a thickness of less than 0.5 mm positioned adjacent to the ferrous metal, and said intermediate metals being welded to the ferrous metal, to each other, and to the titanium sheet.

The method of the present invention allows thin sheets of titanium to be welded to ferrous metals without having to be concerned about leaks or cracks caused by the welding. Without the use of the titanium intermediate, along with the weldably compatible intermediate metal, one would have to use a thicker titanium sheet to protect against welding leaks. Having to use a thicker titanium sheet, solely to minimize leaks caused by welding, is wasteful. The present invention eliminates that necessity.

There are two different welding methods commonly used to weld titanium to ferrous metal, i.e. resistance welding and capacitor discharge welding. However, for welding thin sheets of titanium to ferrous metal, capacitor discharge welding is preferred because it does not generate as much heat as resistance welding.

Using the method of the present invention, titanium sheets as thin as about 0.5 millimeters may easily be welded to ferrous metals. Preferably, however, the titanium sheet has a thickness of less than about 2 millimeters to assure good bonding.

The ferrous metals referred to herein are metals such as, for example, iron, cast iron, ductile iron, steel, stainless steel, and alloys thereof.

Known weldably compatible intermediate metals that are useful for welding titanium to a ferrous metal include, for example, vanadium and nickel. Other compatible intermediate metals are employable and within the skill of the artisan.

Suitable thicknesses for the intermediate metal has been found to be from 0.05 millimeters to 0.50 millimeters. The weldably compatible intermediate metal is preferably at least about 0.25 millimeters and more preferably at least about 0.13 millimeters thick.

The titanium intermediate should be sufficiently thick to minimize the penetration of vanadium through the titanium intermediate. Suitable thicknesses for the titanium intermediate are from about 0.89 millimeters to about 1.3 millimeters or greater. The titanium intermediate is preferably at least about 0.9 millimeters thick. This thickness leaves about 0.1 to 0.3 millimeters of pure titanium remaining unalloyed with the vanadium.

## Example

A 1.22 meter by 3.05 meter hot formed titanium liner (sheet) having a thickness of 0.9 mm and having 144 hollow caps (depressions) was prepared to be welded to one side of a 1.22 meter by 3.05 meter plastic molded cell frame having 144 steel inserts of a length of 2.54 cm protruding from the plastic central barrier.

A 0.13 mm thick by 22 mm diameter vanadium wafer was placed on top of each steel insert on one side of the plastic frame. A 0.89 mm thick by 22 mm diameter titanium wafer was placed on top of each vanadium wafer. The titanium wafer was then welded to the end of the steel insert through the intermediate vanadium wafer by using a capacitor discharge welder. After all 144 titanium wafers had been thus welded, the titanium liner was placed on top of the plastic frame with all 144 hollow caps matching all 144 steel inserts. The flat end of each cap on the titanium liner was then capacitor discharge welded to the titanium wafer which had been already welded to the steel insert through the vanadium wafer. The pan was then vacuum checked for leaks. The plastic frame having a titanium liner welded to steel inserts on one side through vanadium and titanium intermediate wafers and having a nickel liner welded to steel inserts on the opposing side of the frame without any intermediate metal, was used to fabricate a complete flat plate bipolar membrane chlorine cell unit. Four similar cell units were operated successfully for 124 days without any leak due to crack or corrosion of the welds.

## Claims

1. A method of welding a titanium sheet having a thickness of less than about 2 millimeters to a ferrous metal, wherein a weldably compatible intermediate metal adjacent to the ferrous metal and a titanium intermediate adjacent to the titanium sheet between the titanium sheet and the ferrous metal are employed.

2. The method of Claim 1 wherein the titanium intermediate is less than about 2 millimeters thick.

3. The method of Claim 1 wherein the intermediate metal is vanadium.

4. The method of Claim 3 wherein the vanadium is less than about 0.5 millimeter thick.

5. The method of Claim 1 wherein the ferrous metal is selected from iron, cast iron, ductile iron, steel, and stainless steel.

6. An article comprising a titanium sheet having a thickness of less than about 2 mm welded to a ferrous metal, comprising a titanium intermediate metal having a thickness of less than 2 mm positioned adjacent to the titanium sheet, and a vanadium intermediate metal having a thickness of less than 0.5 mm positioned adjacent to the ferrous metal, and said intermediate metals being welded to the ferrous metal, to each other, and to the titanium sheet.

## Patentansprüche

1. Verfahren zum Schweißen einer Titanfolie mit einer Dicke von weniger als etwa 2 mm an ein Eisenmetall, wobei ein schweißbar kompatibles Zwischenmetall benachbart zu dem Eisenmetall und eine Titanzwischenschicht benachbart zu der Titanfolie zwischen der Titanfolie und dem Eisenmetall verwendet wird.

2. Verfahren nach Anspruch 1, wobei die Titanzwischenschicht weniger als etwa 2 mm dick ist.

3. Verfahren nach Anspruch 1, worin das Zwischenmetall Vanadium ist.

4. Verfahren nach Anspruch 3, worin das Vanadium weniger als etwa 0,5 mm dick ist.

5. Verfahren nach Anspruch 1, worin das Eisenmetall ausgewählt ist aus Eisen, Gußeisen, sphärolitischem Gußeisen, Stahl und rostfreiem Stahl.

6. Gegenstand umfassend eine Titanfolie mit einer Dicke von weniger als etwa 2 mm, die an ein Eisenmetall geschweißt ist, umfassend ein Titanzwischenmetall mit einer Dicke von weniger als 2 mm, das benachbart zu der Titanfolie angeordnet ist und einem Vanadiumzwischenmetall mit einer Dicke von weniger als 0,5 mm, das benachbart zu dem Eisenmetall angeordnet ist, wobei die Zwischenmetalle an das Eisenmetall, aneinander und an die Titanfolie geschweißt sind.

## Revendications

1. Procédé de soudage d'une feuille de titane ayant une épaisseur inférieure à environ 2 millimètres sur un métal ferreux, selon lequel on utilise entre cette feuille de titane et le métal ferreux, en position adjacente à ce métal ferreux, un métal intermédiaire compatible sur le plan soudage et, en position adjacente à la feuille de titane, un intermédiaire en titane.

2. Procédé de la revendication 1, dans lequel l'intermédiaire en titane a une épaisseur inférieure à environ 2 millimètres.

3. Procédé de la revendication 1, dans lequel le métal intermédiaire est du vanadium.

4. Procédé de la revendication 3, dans lequel le vanadium a une épaisseur inférieure à environ 0,5 millimètre.

5. Procédé de la revendication 1, dans lequel le métal ferreux est choisi parmi le fer, la fonte, le fer doux, l'acier et l'acier inoxydable.

6. Produit comprenant une feuille de titane offrant une épaisseur inférieure à environ 2 mm soudée sur un métal ferreux, comprenant un métal intermédiaire métallique formé de titane, ayant une épaisseur inférieure à 2 mm et disposé en position adjacente à la feuille de titane, et un métal intermédiaire du type vanadium ayant une épaisseur inférieure à 0,5 mm et disposé en position adjacente au métal ferreux, lesdits métaux intermédiaires étant soudés sur le métal ferreux, l'un sur l'autre et sur la feuille de titane.